# FASCICULE DE BREVET EUROPEEN

(11) **EP 2 207 162 B1**
(45) Date de publication et mention de la délivrance du brevet: **09.05.2012**
(21) Numéro de dépôt: 10150377.9
(22) Date de dépôt: 08.01.2010
(51) Int. Cl.: G10H 1/00, G06F 13/42

(54) **Système et procédé d'adressage d'un lecteur de cartes à puce et lecteur de cartes à puce**
System und Verfahren zur Adressierung eines Chipkartenlesers und Chipkartenleser
System and method for addressing a smart card reader and smart card reader

(30) Priorité: 09.01.2009 FR 0900082
(43) Date de publication de la demande: 14.07.2010
(73) Titulaire: Xiring, 92518 Suresnes Cedex (FR)
(72) Inventeur: Deborgies, Luc, 92320, Chatillon (FR)
(74) Mandataire: Debay, Yves

(56) Documents cités:
- US-A1- 2006 180 008
- US-A1- 2007 168 668

## Description

La présente invention concerne le domaine de l'électronique et en particulier des lecteurs de cartes à puce telles que, par exemple, les cartes comportant des applications logicielles, dites « smart card» (selon la terminologie anglaise). La présente invention est particulièrement adaptée aux lecteurs de cartes à puce USB (« Universal Serial Bus », selon la terminologie anglo-saxonne).

Un problème dans le domaine des lecteurs de cartes à puce concerne le développement et l'implémentation de pilotes (ou « driver » selon la terminologie anglo-saxonne) spécifiques pour permettre à un lecteur d'être piloté par un terminal tel qu'un ordinateur. Un autre problème concerne le développement et l'implémentation d'applications spécifiques pour le contrôle des lecteurs lors des opérations de ce dernier, telles que des transactions, par exemple bancaires. Par exemple, la demande US 2007/168668 A1 décrit divers modes de réalisation implémentant divers types d'application pour le contrôle de lecteurs. Ces problèmes sont aggravés par le problème du déploiement des parcs de lecteurs et de cartes à puce car il faut, à chaque nouveau déploiement, transmettre aux utilisateurs les supports (tels que des CD d'installation) pour l'installation des pilotes et des applications spécifiques, en plus des lecteurs.

Il est connu dans l'art antérieur des normes dédiées à l'adressage des lecteurs de cartes à puce, connues sous les dénominations de PC/SC (pour l'anglais « Personal Computer/ Smart Card ») et CCID (pour l'anglais « Chip/Smart Card Interface Devices »). La norme CCID utilise des pilotes génériques (normalisés) permettant d'installer un lecteur de cartes à puce de type USB sur le système d'exploitation d'un ordinateur et permettant à certaines applications exécutées sur l'ordinateur de dialoguer avec une application embarquée sur la carte à puce, au travers d'une interface du type CCID présente dans le lecteur de cartes à puce. Cependant, les pilotes génériques de type CCID ne sont pas présents dans tous les systèmes d'exploitation et ne permettent pas toujours toutes les fonctionnalités nécessaires pour les lecteurs de carte à puce. Pour la norme PC/SC, il est connu des pilotes, dits « propriétaires », qui sont mis au point spécifiquement par les constructeurs de lecteurs ou les développeurs pour communiquer avec une interface complémentaire présente dans le lecteur et également mise au point spécifiquement pour un type de lecteur donné de cartes à puce, qui ne sont pas du type USB. Les applications sont exécutées dans une interface de programmation applicative (API, pour l'anglais « Application Programming Interface ») de type PC/SC implémentée grâce à une librairie de liens dynamiques (dll, pour l'anglais « dynamic link library ») présente dans le système d'exploitation de l'ordinateur. Ce type de solution présente les inconvénients de nécessiter le développement de pilotes et d'applications pour les terminaux et le développement d'interfaces pour les lecteurs. Un autre inconvénient concerne le fait qu'elles requièrent de l'utilisateur qu'il installe les pilotes adaptés sur l'ordinateur destiné à recevoir le lecteur de cartes à puce et qu'il installe une application compatible permettant d'accéder au lecteur et à la carte à puce, même dans le cas où un pilote de type PC/SC ou CCID est utilisé. De plus, l'adressage des lecteurs de cartes à puce faisant l'objet de normes, un problème supplémentaire concerne le fait qu'il faut se conformer aux normes ou soumettre de nouveaux pilotes, notamment de type CCID pour leur inclusion dans la norme.

Dans ce contexte, il est intéressant de proposer une solution permettant d'éviter les problèmes liés au développement et à l'implémentation de pilotes et/ou d'applications pour l'adressage des lecteurs.

La présente invention a pour but de pallier au moins un des inconvénients de l'art antérieur en proposant un système d'adressage de lecteur de carte à puce permettant d'éviter au moins un des problèmes liés au développement et à l'implémentation de pilotes et/ou d'applications pour l'adressage des lecteurs. Ce système d'adressage doit présenter en outre au moins un des avantages suivants : éviter le développement d'un pilote et/ou d'une application spécifique pour l'adressage du lecteur et l'échange de données, éviter la nécessité de fichiers d'échanges temporaires pour l'échange de données entre le terminal et le lecteur, permettre un échange bidirectionnel de données entre le terminal et le lecteur de préférence avec un débit suffisant pour les transactions dans les deux sens, éviter l'interférence avec d'autres périphériques connectés sur le terminal.

Ce but est atteint par un système d'adressage d'un lecteur de carte à puce, le système comprenant, d'une part, au moins un terminal comportant au moins un port USB et, d'autre part, un lecteur de carte à puce comprenant au moins un port USB et des moyens de traitement de données exécutant une application embarquée spécifique pour effectuer des transactions avec la carte à puce, par l'échange de données spécifiques, et pour communiquer avec au moins une application exécutée au sein d'un système d'exploitation exécuté sur des moyens de traitement de données du terminal, le système étant caractérisé en ce que le système d'exploitation du terminal comporte au moins un pilote générique de type MIDI-USB et en ce que le lecteur et le terminal comportent chacun :
- un module de traduction traduisant lesdites données spécifiques en messages formatés selon le protocole MIDI filaire de la norme MIDI ou inversement,
- un module d'encapsulation/désencapsulation traduisant lesdits messages au protocole MIDI filaire en paquets formatés selon le protocole MIDI-USB ou inversement.

Selon une autre particularité, l'application du terminal est une application logicielle de type navigateur internet et comporte une appliquette ou « applet » compatible avec les protocoles MIDI filaire et MIDI-USB et formant les modules de traduction et d'encapsulation/désencapsulation du terminal pour générer lesdits messages et lesdits paquets.

Selon une autre particularité, l'appliquette ou « applet » exécutée dans l'application du terminal est également agencée pour la mise en oeuvre de transactions entre une carte à puce lue par le lecteur et au moins un serveur, via au moins un réseau de communication, le serveur comportant des moyens de traitement de données exécutant au moins une application gérant ces transactions.

Selon une autre particularité, l'application du serveur est agencée pour transmettre au terminal des données représentatives d'un fichier auto-exécutable agencé pour installer l'appliquette ou « applet » dans l'application du terminal.

Selon une autre particularité, l'appliquette ou « applet » est en langage JAVA.

Selon une autre particularité, l'appliquette ou « applet » est en langage ActiveX.

Selon une autre particularité, le module de traduction comporte des moyens de formatage pour formater lesdites données spécifiques en données compatibles avec lesdits messages au protocole MIDI filaire, ces moyens de formatage comportant :
- un module de concaténation agencé pour concaténer tous les bits de tous les octets composant les données du lecteur de carte à puce,
- un module d'intercalage agencé pour intercaler un bit nul tous les sept bits,
- un module d'inclusion agencé pour inclure les derniers bits des données spécifiques, lorsque leur nombre est inférieur à sept, dans un octet dont les bits supplémentaires sont mis à zéro.

Selon une autre particularité, le module de traduction est agencé pour générer lesdits messages formatés selon le protocole MIDI filaire de la norme MIDI, à partir desdites données spécifiques, grâce à :
- un module d'introduction générant un premier octet, valant soit F0 pour indiquer le début d'un nouveau message, soit F7 pour indiquer la suite d'un précédent message,
- un module d'identification générant un identifiant composé de un à trois octets pour identifier le terminal ou le lecteur auquel le message est destiné,
- les moyens de formatage et un module d'incorporation incorporant, dans le message, les données formatées par ces moyens de formatage,
- un module de conclusion générant un octet final, valant F7.

Selon une autre particularité, le module de traduction comporte des moyens de conversion pour convertir les données desdits messages au protocole MIDI filaire en données spécifiques, ces moyens de conversion comportant :
- un module d'extraction agencé pour extraire sept bits tous les huit bits,
- un module de concaténation agencé pour concaténer les bits extraits en octets de huit bits.

Selon une autre particularité, le module de traduction est agencé pour traduire lesdits messages formatés selon le protocole MIDI filaire de la norme MIDI en lesdites données spécifiques, grâce à :
- un module d'interprétation, interprétant, d'une part, la valeur d'un premier octet du message, valant soit F0 et indiquant le début d'un nouveau message, soit F7 et indiquant la suite d'un précédent message, et, d'autre part, la valeur d'un octet final, valant F7 et indiquant la fin du message.
- un module d'authentification agencé pour authentifier un identifiant composé de un à trois octets et identifiant le lecteur ou le terminal auquel est destiné le message,
- les moyens de conversion.

La présente invention a également pour but de pallier au moins un des inconvénients de l'art antérieur en proposant un procédé d'adressage de lecteur de carte à puce permettant d'éviter au moins un des problèmes liés au développement et à l'implémentation de pilotes et/ou d'applications pour l'adressage des lecteurs. Ce procédé d'adressage doit présenter en outre au moins un des avantages suivants : éviter le développement d'un pilote et/ou d'une application spécifique pour l'adressage du lecteur et l'échange de données, éviter la nécessité de fichiers d'échanges temporaires pour l'échange de données entre le terminal et le lecteur, permettre un échange bidirectionnel de données entre le terminal et le lecteur de préférence avec un débit suffisant pour les transactions dans les deux sens, éviter l'interférence avec d'autres périphériques connectés sur le terminal.

Ce but est atteint par un procédé d'adressage d'un lecteur de carte à puce, mis en oeuvre par un système selon l'invention lorsque le lecteur est connecté sur le terminal, par un câble USB via leur port respectif, le procédé étant caractérisé en ce qu'il comporte les étapes suivantes :
- initialisation du pilote générique dans le terminal et reconnaissance du lecteur comme un périphérique de type MIDI-USB par le terminal,
- initialisation de l'application du terminal et de l'application du lecteur,
- communication de données, entre l'application du terminal et l'application embarquée du lecteur, via leur module de traduction et leur module d'encapsulation/désencapsulation, mettant en oeuvre, respectivement, des étapes de traduction et d'encapsulation/désencapsulation en utilisant, respectivement, les protocoles standard de type MIDI filaire et MIDI-USB.

La présente invention a également pour but de pallier au moins un des inconvénients de l'art antérieur en proposant un lecteur de carte à puce permettant d'éviter au moins un des problèmes liés au développement et à l'implémentation de pilotes et/ou d'applications pour l'adressage des lecteurs. Ce lecteur doit présenter en outre au moins un des avantages suivants : éviter le développement d'un pilote et/ou d'une application spécifique pour son adressage du lecteur et l'échange de données, éviter la nécessité de fichiers d'échanges temporaires pour l'échange de données entre le terminal et le lecteur, permettre un échange bidirectionnel de données entre le terminal et le lecteur de préférence avec un débit suffisant pour les transactions dans les deux sens, éviter l'interférence avec d'autres périphériques connectés.,sur le terminal.

Ce but est atteint par un lecteur de carte à puce comprenant au moins un port USB et des moyens de traitement de données exécutant une application embarquée spécifique pour effectuer des transactions avec la carte à puce, par l'échange de données spécifiques, et pour communiquer avec une application exécutée au sein d'un système d'exploitation exécuté sur des moyens de traitement de données d'au moins un terminal comprenant au moins un port USB pour la connexion du lecteur, le système d'exploitation du terminal comprenant au moins un pilote générique de type MIDI-USB, le lecteur étant caractérisé en ce qu'il est reconnu comme un périphérique MIDI-USB par le terminal dont le système d'exploitation comprend au moins un pilote générique de type MIDI-USB et en ce qu'il comporte :
- un module de traduction traduisant lesdites données spécifiques en messages formatés selon le protocole MIDI filaire de la norme MIDI ou inversement,
- un module d'encapsulation/désencapsulation traduisant lesdits messages au protocole MIDI filaire en paquets formatés selon le protocole MIDI-USB ou inversement.

Selon une autre particularité, le module de traduction comporte des moyens de formatage pour formater lesdites données spécifiques en données compatibles avec lesdits messages au protocole MIDI filaire, ces moyens de formatage comportant :
- un module de concaténation agencé pour concaténer tous les bits de tous les octets composant les données du lecteur de carte à puce,
- un module d'intercalage agencé pour intercaler un bit nul tous les sept bits,
- un module d'inclusion agencé pour inclure les derniers bits des données spécifiques, lorsque leur nombre est inférieur à sept, dans un octet dont les bits supplémentaires sont mis à zéro.

Selon une autre particularité, le module de traduction est agencé pour générer lesdits messages formatés selon le protocole MIDI filaire de la norme MIDI, à partir desdites données spécifiques, grâce à :
- un module d'introduction générant un premier octet, valant soit F0 pour indiquer le début d'un nouveau message, soit F7 pour indiquer la suite d'un précédent message,
- un module d'identification générant un identifiant composé de un à trois octets pour identifier le terminal auquel le message est destiné,
- les moyens de formatage et un module d'incorporation incorporant dans le message les données formatées par ces moyens de formatage,
- un module de conclusion générant un octet final, valant F7.

Selon une autre particularité, le module de traduction comporte des moyens de conversion pour convertir les données desdits messages au protocole MIDI filaire en lesdites données spécifiques, ces moyens de conversion comportant :
- un module d'extraction agencé pour extraire sept bits tous les huit bits,
- un module de concaténation agencé pour concaténer les bits extraits en octets de huit bits.

Selon une autre particularité, le module de traduction est agencé pour traduire lesdits messages formatés selon le protocole MIDI filaire de la norme MIDI en lesdites données spécifiques, grâce à :
- un module d'interprétation, interprétant, d'une part, la valeur d'un premier octet du message, valant soit F0 et indiquant le début d'un nouveau message, soit F7 et indiquant la suite d'un précédent message, et, d'autre part, la valeur d'un octet final, valant F7 et indiquant la fin du message,
- un module d'authentification agencé pour authentifier un identifiant composé de un à trois octets et identifiant le lecteur auquel est destiné le message,
- les moyens de conversion.

D'autres particularités et avantages de la présente invention apparaîtront plus clairement à la lecture de la description ci-après, faite en référence aux dessins annexés, dans lesquels :
- la figure 1 représente un mode de réalisation d'un système d'adressage de lecteur de carte à puce,
- la figure 2 représente un mode de réalisation d'un procédé d'adressage de lecteur de carte à puce.

La présente invention concerne un système et un procédé d'adressage de lecteur de carte à puce et un lecteur de carte à puce permettant d'éviter au moins un des problèmes liés au développement et à l'implémentation de pilotes et/ou d'applications pour l'adressage des lecteurs. Contrairement à la solution classique consistant à développer un nouveau pilote générique CCID qui supporterait toutes les fonctionnalités des lecteurs et pourrait être normalisé et inclut dans les systèmes d'exploitation ou la solution consistant à développer un nouveau pilote PC/SC qui pourrait être normalisé et inclut dans les systèmes d'exploitation, les inventeurs de la présente invention ont formulé un problème nouveau qui consiste chercher comment obtenir un lecteur ne nécessitant pas de pilote spécifique. Les inventeurs ont alors découvert qu'ils pouvaient utiliser un pilote qui est dédié à d'autres périphériques que les lecteurs de carte à puce et qui est déjà existant dans les systèmes d'exploitation, en adaptant notamment les lecteurs de carte à puce, par des moyens spécifiques décrits ci-après, au type de communication requis par ces pilotes dédiés à d'autres types de périphériques que les lecteurs de carte à puce. De plus, l'invention permet éventuellement d'éviter d'avoir à installer une application spécifique pour contrôler le lecteur et gérer les transactions qui sont réalisées par les utilisateurs à l'aide de ce dernier. Divers modes de réalisation de l'invention présentent en outre au moins un des avantages suivants:
- éviter le développement d'un pilote et/ou d'une application spécifique pour l'adressage du lecteur et l'échange de données,
- éviter la nécessité de fichiers d'échanges temporaires pour l'échange de données entre le terminal et le lecteur,
- permettre un échange bidirectionnel de données entre le terminal et le lecteur, de préférence avec un débit suffisant pour les transactions dans les deux sens,
- éviter l'interférence avec d'autres périphériques connectés sur le terminal.

Par le terme « terminal », on entend ici tout type de dispositif comportant des ressources pour traiter des données numériques telles que celles classiquement utilisées dans le domaine des lecteurs de carte à puce. Ainsi, un terminal pourra être un ordinateur ou n'importe quel dispositif informatique comportant les moyens décrits ci-après, qu'il soit portable ou non, comme par exemple les dispositifs portables capables de naviguer sur Internet via les réseaux de téléphonie mobile ou les réseaux sans fil. Plusieurs aspects fonctionnels décrits dans la présente description sont désignés comme étant supportés par des « moyens de traitement ». On comprendra notamment à la lecture de la présente demande que les composants de la présente invention, comme généralement décrits et illustrés dans les figures, puissent être arrangés et conçus selon une grande variété de configurations différentes. Ainsi, la description de la présente invention et les figures afférentes représentent simplement des modes de réalisation choisis sans limiter la portée de l'invention. On entend ici par le terme « moyens de traitement », des ressources pour le traitement de données numériques. De telles ressources pourront comporter au moins un processeur, ou micro-processeur, ou microcontrôleur, ou au moins un circuit électronique, tel qu'un circuit intégré par exemple ou d'autre types d'arrangement de composants, tels que par exemple des semi-conducteurs, des portes logiques, des transistors ou d'autres composants discrets. De tels moyens de traitement peuvent également être supportés par une ou plusieurs application(s) logicielle(s) ou portion(s) de code exécutable(s) au sein d'au moins un environnement logiciel, pour l'exécution par divers types de processeurs et ce, quel que soit le langage utilisé. Un ou plusieurs bloc(s) physique(s) ou logique(s) d'instructions machine peuvent, par exemple, être organisés en modules, appliquette (ou « applet »), objet, procédé, ou fonction. On parle ainsi dans la présente description de modules pour identifier fonctionnellement des moyens implémentés dans les moyens de traitement des dispositifs pour réaliser des fonctions définies. De plus, les routines et instructions utilisées par ces moyens de traitement n'ont pas besoin d'être physiquement localisés ensemble, mais peuvent comporter des instructions disparates stockées dans différents endroits qui, une fois réunis fonctionnellement et logiquement ensemble, forment le module et réalisent le but indiqué pour le module. En effet, une instruction simple de code exécutable, ou une pluralité d'instructions, peut en fait être distribuée parmi plusieurs différents segments de code ou parmi différents programmes et stockée dans plusieurs blocs de mémoires. De même, des données opérationnelles peuvent être identifiées et illustrées dans des moyens de traitement, et peuvent être incorporées sous n'importe quelle forme appropriée et être organisées dans n'importe quel type approprié de structure de données. L'homme de métier comprendra que de tels modules pourront comporter des instructions exécutées au sein des systèmes d'exploitation ou d'applications logicielles ou d'appliquettes (« applet » selon la terminologie anglo-saxonne), exécutés sur les moyens de traitement.

En particulier, en ce qui concerne le lecteur, la présente description réfère à différents modules qui pourront, selon divers modes de réalisation qui ne sont pas forcément exclusifs et dont la combinaison est dans la portée de la présente invention, être implémentés dans le firmware du lecteur, ou dans le firmware de la puce d'un câble intelligent (par exemple un câble USB muni d'un microcontrôleur), dans une application embarquée sur le lecteur et contrôlant les opérations de ce dernier (stockée sur des moyens de mémorisation du lecteur et exécutée sur ses moyens de traitement). De plus, il est connu dans l'art antérieur des cartes à puce « intelligente », appelées « smart card » selon la terminologie anglo-saxonne, c'est-à-dire comportant des moyens de traitement permettant l'exécution d'applications. Dans le cas de telles cartes à puce, l'homme de métier comprendra que l'application (100) spécifique du lecteur, contrôlant les opérations de ce dernier en relation avec la carte (5) à puce, pourra en fait être supportée par la carte (5) à puce elle-même au lieu d'être effectivement exécutée par le lecteur (1). D'autres variantes intermédiaires, dans lesquelles le lecteur et la carte coopèrent pour exécuter l'application, sont également connues et dans la portée de la présente invention. Aucun détail n'est nécessaire ici sur les opérations réalisées entre la carte (5) à puce et le lecteur (1), la présente description se concentrant sur les opérations entre le lecteur (1) et au moins le terminal (2) sur lequel il est connecté. Le terme « réseau (4) de communication » est utilisé ici pour désigner n'importe quel réseau de communication, de préférence de type Internet, qu'il soit supporté par les technologies de téléphonie mobile, le câble, l'ADSL ou toute technologie permettant une communication telle que celle fournie par Internet.

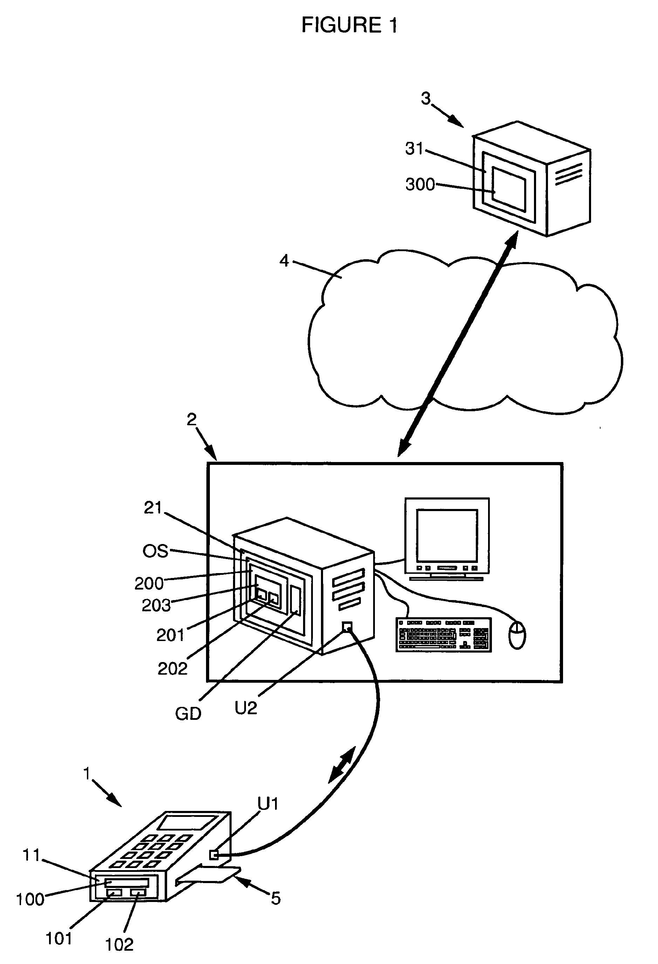

L'invention concerne en outre un système d'adressage d'un lecteur de carte à puce, dont un exemple de réalisation est représenté sur la figure 1. De façon connue en soi, le système comprend au moins un terminal (2) et au moins un lecteur (1) de carte à puce. Le lecteur (1) accède à la carte (5) à puce (en lecture et/ou en écriture) grâce à des moyens connus de l'art antérieur. Le terminal (2) comporte au moins un port USB (U2), des moyens (21) de traitement de données du terminal (2) sur lesquels est exécuté un système d'exploitation (OS) (« operating system » selon la terminologie anglo-saxonne), au sein duquel est exécutée une application (200) pour contrôler les opérations du terminal (2) en relation avec le lecteur (1) (et par conséquent la carte à puce). Le lecteur (1) de carte à puce comprend au moins un port USB (U1) et des moyens (11) de traitement de données exécutant une application embarquée (100) spécifique pour effectuer des transactions avec la carte à puce, par l'échange de données spécifiques, et pour communiquer avec le terminal (2). La présente invention propose d'utiliser les pilotes génériques de type MIDI (« Musical Instrument Digital Interface » selon la terminologie anglo-saxonne) qui sont généralement présents dans les systèmes d'exploitation (OS) modernes des terminaux. La norme MIDI décrit 2 types de protocoles. Un premier protocole MIDI, appelé « filaire », décrit le format des données et des messages transmis sur un câble MIDI entre deux dispositifs MIDI. Un second protocole, appelé « MIDI USB », permet d'encapsuler les données et messages du protocole MIDI filaire dans des paquets ou trames USB. Des messages au protocole MIDI filaire peuvent donc transiter (en paquets ou trames) sur un canal MIDI-USB grâce à cette encapsulation qui est décrite en détail dans la norme MIDI-USB et ne sera pas détaillée ici. Le terminal (2) comprend au moins un pilote (GD) générique de type MIDI-USB. Par exemple, dans les systèmes d'exploitation tels que, par exemple, Windows™ XP, les périphériques MIDI sont reconnus automatiquement grâce à ces pilotes génériques. Ce pilote permet donc de connecter sur le terminal (2) un dispositif de type MIDI, via un câble USB et de lui envoyer ou d'en recevoir des données. Le système selon l'invention est caractérisé en ce que le lecteur (1) et le terminal (2) comportent chacun :
- un module de traduction (101, 201) traduisant lesdites données spécifiques en messages formatés selon le protocole MIDI filaire de la norme MIDI ou inversement,
- un module d'encapsulation/désencapsulation (102, 202) traduisant lesdits messages au protocole MIDI filaire en paquets formatés selon le protocole MIDI-USB ou inversement.

Ainsi, le lecteur (1) est équipé d'au moins deux modules (101, 102) formant une interface lui permettant d'être reconnu comme un périphérique de type MIDI par le terminal (2) sur lequel on le connecte via un câble USB. Ces modules permettent donc les échanges, selon le protocole. MIDI-USB, entre le lecteur (1) et le terminal (2).

L'homme du métier comprendra de la présente demande que le lecteur (1) et le terminal (2) comportant chacun les modules (101, 102, 201, 202) de traduction et d'encapsulation/désencapsulation, les opérations du système et du lecteur, ainsi que les étapes du procédé décrites ici, peuvent être mises en oeuvre aussi bien du terminal (2) vers le lecteur (1) que du lecteur (1) vers le terminal (2). Ainsi, les transactions réalisées par les applications pourront passer par des échanges bidirectionnels entre le lecteur (1) et le terminal (2). L'homme du métier comprendra de la présente demande que, d'une part, dans le cas où la carte comporte une application embarquée exécutée sur la puce pour les transactions, le lecteur peut en fait n'être qu'un relais permettant ces échanges entre la carte à puce et le terminal, et que, d'autre part, dans le cas d'une carte à puce ne stockant que des données nécessaires aux transactions, le terminal pourra avoir une application (100) agencée pour réaliser les transactions pour les cartes à puce, grâce aux données fournies par celles-ci. Les communications entre les cartes à puce et les lecteurs étant connues de l'homme de métier, elles ne seront pas détaillées ici. Par exemple, dans le domaine des échanges bancaires à distance sécurisés, des lecteurs de cartes à puce sont utilisés pour l'authentification bancaire. On parlera dans la suite de la présente description de transactions pour référer à ces échanges. Ces transactions sont connues de l'homme de métier, notamment en ce qui concerne les diverses étapes d'authentification et de sécurisation des échanges. Aucun détail ne sera donné ici et l'homme de métier comprendra que la présente invention est utilisable pour n'importe quel type de communication d'une carte à puce avec un terminal, via le lecteur, ou même avec un serveur connecté au terminal. De même, l'homme de métier comprendra de la présente demande que les données mentionnées ici comme des « données spécifiques » concernent les transactions et communications utilisées classiquement dans le domaine et aucun détail n'est nécessaire sur ces données. Pour exemple, on pourra citer, à titre illustratif et nullement limitatif, les OTP (« one-time password », selon la terminologie anglo-saxonne) servant à sécuriser les échanges de données lors de telles transactions. L'invention propose de formater les données (appelées ici « données spécifiques ») échangées entre le terminal et le lecteur, qui sont normalement dans un format déterminé (par exemple des octets de huit bits), en les convertissant en données compatibles avec les protocoles MIDI filaire et MIDI-USB, comme détaillé ci-après. L'homme de métier comprendra de la présente demande que l'invention pourra effectuer cette conversion quel que soit le format initial desdites données spécifiques, grâce aux moyens et modules décrits ci-après.

Dans certains modes de réalisation, l'application (200) du terminal (2) est une application logicielle de type navigateur Internet et comporte une appliquette (203) ou « applet » compatible avec les protocoles MIDI filaire et MIDI-USB et formant les modules de traduction (201) et d'encapsulation/désencapsulation (202) du terminal (2) pour générer lesdits messages et lesdits paquets. En effet, il est connu des appliquettes, tels que des applets JAVA™ qui sont agencées pour gérer des périphériques MIDI. Par exemple, depuis le JAVA™ 1.3, les navigateurs Internet utilisant les applets JAVA™ peuvent contrôler un périphérique MIDI sans aucune intervention de l'utilisateur. Dans les versions antérieures, les navigateurs requièrent le téléchargement et l'installation d'une applet spécifique, éventuellement après un accord de l'utilisateur. Cependant, même pour ces versions antérieures, l'utilisateur n'a pas à installer lui-même une quelconque application et l'applet peut s'installer toute seule dans le navigateur car les protocoles MIDI sont généralement considérés comme sans risque par les systèmes d'exploitation et ne nécessitent pas forcément d'autorisation. On notera d'ailleurs que grâce à cette particularité, le lecteur (1) reconnu comme un périphérique MIDI est donc généralement reconnu comme un périphérique non dangereux et ne requiert généralement aucune fenêtre de validation (« pop-up » selon la terminologie anglo-saxonne) d'installation. Le lecteur (1) selon l'invention est donc reconnu tout seul par le terminal (2), généralement sans alerte du système d'exploitation. De même ici, le navigateur peut généralement utiliser le lecteur comme un périphérique MIDI non dangereux sans aucune alerte. Ainsi, dans le cas d'un terminal dont le navigateur (200) est équipé de la plateforme JAVA™ 1.3, aucune modification du terminal (2) n'est nécessaire et le lecteur (1) branché sera reconnu comme un périphérique MIDI-USB auquel l'appliquette accède directement. On notera que l'appliquette (203) ou « applet » peut être en langage JAVA mais qu'elle pourra également être dans d'autres langages, comme par exemple le langage ActiveX. Dans ce cas, le navigateur pourra demander confirmation à l'utilisateur d'autoriser l'installation du « plugin » ActiveX, sans autre intervention nécessaire. Si le plugin est signé auprès des développeurs de systèmes d'exploitation, la nécessité de cette confirmation pourra être évitée. On notera que certains systèmes d'exploitation de certains terminaux (2) peuvent être munis d'équivalents à cette appliquette et effectuer eux-mêmes la traduction et l'encapsulation/désencapsulation. Le lecteur (1) en revanche, nécessite l'implémentation des modules de traduction et d'encapsulation/désencapsulation. Divers moyens (ou combinaisons de moyens) de traduction et d'encapsulation/désencapsulation (i.e., diverses implémentation de ces fonctions) sont donc dans la portée de l'invention.

On notera ici que lorsque que le système d'exploitation est du type Windows™ et que le navigateur est du type Internet Explorer™, la présente invention permet que le lecteur de carte à puce, connecté via le canal MIDI, soit géré directement sans Applet JAVA. En effet, ce type de système d'exploitation et ce type de navigateur permet de simplement définir le lecteur de cartes à puce « MIDI » comme lecteur audio par défaut pour le faire fonctionner en l'absence de toute action supplémentaire. Alors, le navigateur se comporte comme s'il jouait des fichiers MIDI et les données sont directement transférées au lecteur.

On notera également que la sécurité des données spécifiques est assurée dans la présente invention, d'une part, par le fait qu'on ne peut pas connaître à priori le canal MIDI sur lequel est adressé le lecteur selon l'invention et, d'autre part, par le fait que les données spécifiques sont cryptées. Donc, même si l'on scanne les différents canaux MIDI pour en extraire les données, ces données ne pourront pas être déchiffrées.

Dans certains modes de réalisation, l'appliquette (203) ou « applet » exécutée dans l'application (200) du terminal est également agencée pour la mise en oeuvre de transactions entre une carte (5) à puce lue par le lecteur (1) et au moins un serveur (3), via au moins un réseau (4) de communication, le serveur (3) comportant des moyens (31) de traitement de données exécutant au moins une application (300) gérant ces transactions. Ainsi, l'utilsateur n'a qu'à brancher son lecteur (1) sur le terminal et se connecter à un site internet donnant accès au serveur (3) pour que les transactions soient effectuées directement. Dans certaines variantes, comme mentionné précédemment pour le cas d'applets qui ne seraient pas déjà présentes dans le terminal (2), l'application (300) du serveur (3) est agencée pour transmettre au terminal (2) des données représentatives d'un fichier auto-exécutable agencé pour installer l'appliquette (203) ou « applet » dans l'application (200) du terminal (2).

Pour que les données spécifiques des transactions réalisées par le lecteur et la carte à puce connecté au terminal puissent transiter sur le canal MIDI-USB, le lecteur (1) selon l'invention comporte un module de traduction (101) et un module (102) d'encapsulation/désencapsulation. Le module de traduction est agencé pour traduire les données spécifiques du lecteur (et de la carte à puce) en données compatibles avec le protocole MIDI filaire, de préférence tel que décrit dans la norme. Par exemple, cette norme MIDI décrit en particulier des messages MIDI dits « exclusifs à un système », appelés ci-après « SysEx », qui transportent des données dont l'usage n'est pas spécifiée par la norme MIDI et qui sont destinés à être traités par un type de système MIDI défini dans le message, et donc ignorés par les autres systèmes MIDI.

Les messages « SysEx » sont constitués des octets suivants :
- Un premier octet valant F0 indiquant le début d'un nouveau message SysEx, ou F7 indiquant la suite d'un précédent message SysEx,
- Un nombre de un à trois octets permettant d'identifier de manière univoque le système auquel ce message SysEx est destiné,
- Un nombre quelconque d'octets quelconques, dont le bit de poids fort est à zéro, constituant le corps du message SysEx,
- Un octet final, valant F7.

On notera que le nombre de un à trois octets permettant d'identifier le système auquel est destiné le message SysEx sert de préférence dans l'invention à former un identifiant du lecteur ou du terminal à destination duquel le message est envoyé (dans l'un ou l'autre sens). Il existe une liste de fabricants industriels de systèmes MIDI, où l'on peut trouver les valeurs possibles pour cet identifiant. La norme MIDI précise qu'un système MIDI doit ignorer les messages SysEx qui ne lui sont pas destinés, en ne traitant pas les messages qui ne commencent pas par la bonne valeur de cet identifiant. Dans certains modes de réalisation, les messages SysEx destinés au module de traduction (du terminal ou du lecteur), ainsi que ceux émis par celui-ci comprennent à cet endroit un identifiant qui ne figure pas dans la liste, afin que ces messages SysEx soient ignorés par tous les systèmes MIDI, si il arrivait que ces messages puissent leur parvenir.

Pour pouvoir utiliser ce format de données, le module de traduction (101, 201) comporte des moyens de formatage pour formater lesdites données spécifiques en données compatibles avec lesdits messages au protocole MIDI filaire. Ces moyens de formatage comportent de préférence:
- un module de concaténation agencé pour concaténer tous les bits de tous les octets composant les données du lecteur (1) de carte à puce,
- un module d'intercalage agencé pour intercaler un bit nul tous les sept bits,
- un module d'inclusion agencé pour inclure les derniers bits des données spécifiques, lorsque leur nombre est inférieur à sept, dans un octet dont les bits supplémentaires sont mis à zéro.

Ainsi, le module de traduction (101, 201), grâce à ces moyens de formatage, peut générer des données à inclure dans le corps du message SysEx. Ensuite, pour utiliser la norme MIDI, il faut générer les messages SysEX comportant ces données. Le module de traduction (101, 201) est donc agencé pour générer lesdits messages formatés selon le protocole MIDI filaire de la norme MIDI, à partir desdites données spécifiques. Le module de traduction (101, 201) est de préférence agencé pour cela grâce à:
- un module d'introduction générant un premier octet, valant soit F0 pour indiquer le début d'un nouveau message, soit F7 pour indiquer la suite d'un précédent message,
- un module d'identification générant un identifiant composé de un à trois octets pour identifier le terminal (2) ou le lecteur (1) auquel le message est destiné,
- les moyens de formatage et un module d'incorporation incorporant, dans le message, les données formatées par ces moyens de formatage,
- un module de conclusion générant un octet final, valant F7.

On comprend donc que le module de traduction (101, 201) permet, de générer des messages SysEx comprenant, dans le corps du message, des données représentatives des données spécifiques des transactions. Il suffit alors d'encapsuler ces messages dans des paquets USB pour les transmettre au module de traduction (201, 101) de l'autre côté du câble USB. Une fois cette transmission réalisée, une nouvelle traduction (mais en sens inverse) doit avoir lieu pour obtenir à nouveau les données spécifiques pour leur traitement par les applications gérant les transactions.

Le module de traduction (101, 201) est donc également agencé pour traduire lesdits messages formatés selon le protocole MIDI filaire de la norme MIDI en lesdites données spécifiques. Le module de traduction (101, 201) est de préférence agencé pour cela grâce à :
- un module d'interprétation, interprétant, d'une part, la valeur d'un premier octet du message, valant soit F0 et indiquant le début d'un nouveau message, soit F7 et indiquant la suite d'un précédent message, et, d'autre part, la valeur d'un octet final, valant F7 et indiquant la fin du message.
- un module d'authentification agencé pour authentifier un identifiant composé de un à trois octets et identifiant le lecteur (1) ou le terminal (2) auquel est destiné le message,
- des moyens de conversion.

En particulier, ces moyens de conversion sont agencés pour convertir les données formatées selon le protocole MIDI filaire en données spécifiques. Ces moyens de conversion comportent de préférence:
- un module d'extraction agencé pour extraire sept bits tous les huit bits,
- un module de concaténation agencé pour concaténer les bits extraits en octets de huit bits.

On notera ici que le module de concaténation est agencé pour générer un nombre entier d'octets. Ainsi, les bits à 0 ajoutés lors de l'inclusion qui ne forment pas un octet entier ne sont pas pris en compte. On obtient donc un nombre entier d'octets dont tous les bits ont une valeur définie. Les derniers bits qui ne forment pas un octet entier sont simplement supprimés.

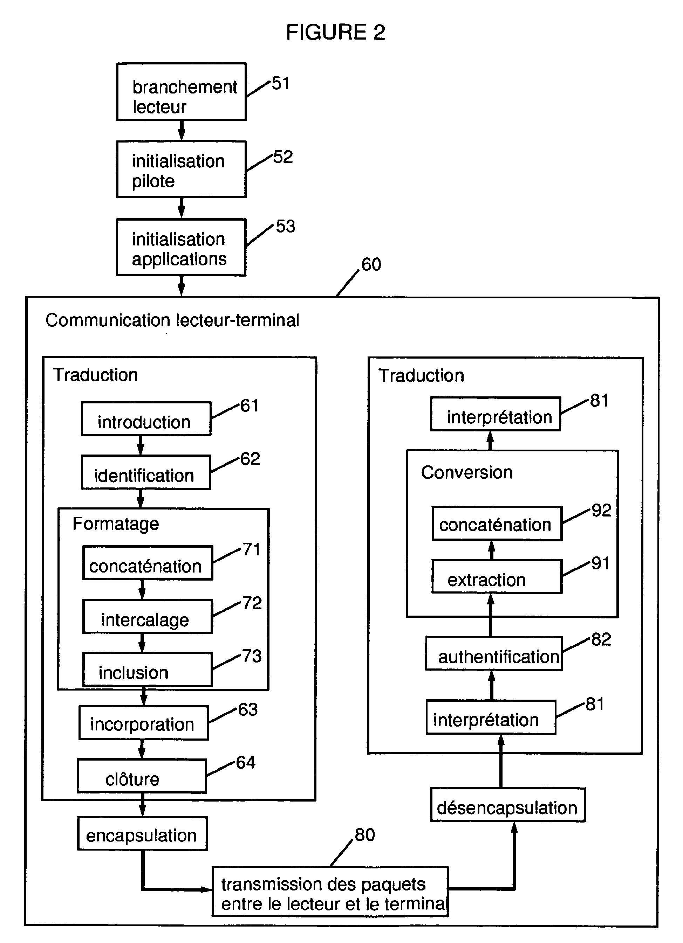

L'invention concerne également un procédé d'adressage d'un lecteur de carte à puce, mis en oeuvre dans un système selon l'invention lorsque le lecteur (1) est connecté (51) sur le terminal (2), par un câble USB via leur port (U1, U2) respectif. Ce procédé, dont un exemple est représenté sur la figure 2, est caractérisé en ce qu'il comporte de préférence les étapes suivantes :
- initialisation (52) du pilote (GD) générique dans le terminal (2) et reconnaissance du lecteur (1) comme un périphérique de type MIDI-USB par le terminal (2),
- initialisation (53) de l'application (200) du terminal (2) et de l'apptication (100) du lecteur (1),
- communication (60) de données, entre l'application (200) du terminal et l'application (100) embarquée du lecteur (1), via leur module de traduction (101, 201) et leur module d'encapsulation/désencapsulation (102, 202), mettant en oeuvre, respectivement, des étapes de traduction et d'encapsulation/désencapsulation en utilisant, respectivement, les protocoles standard de type MIDI filaire et MIDI-USB.

On comprend donc qu'en mettant en oeuvre ces étapes, on adresse directement le lecteur, sans requérir d'intervention de l'utilisateur. On comprendra également que dans le cas de transactions avec un serveur, via un navigateur du terminal, l'étape (60) de communication sera contrôlée par l'application (300) du serveur, éventuellement l'application (200) du terminal, notamment lorsqu'une saisie de l'utilisateur est requise sur le terminal, et par l'application (100) du lecteur. On ne détaillera pas ici les étapes relatives aux transactions, telles que celles, par exemple, où le lecteur affiche une donnée (par exemple un montant) qui lui est transmis par le serveur (3) ou le terminal (2) et requiert de l'utilisateur de la carte (5) à puce de saisir son code sur le lecteur (1).

L'étape de communication (60) via les modules (101, 102, 201, 202) de traduction et d'encapsulation/désencapsulation comporte au moins une étape de traduction comprenant les étapes de formatage suivantes :
- une étape de concaténation (71), par le module de concaténation, pour concaténer tous les bits de tous les octets composant les données du lecteur (1) de carte à puce,
- une étape d'intercalage (72) d'un bit nul, par le module d'intercalage, pour intercaler un bit nul tous les sept bits,
- une étape d'inclusion (73) des derniers bits, par le module d'inclusion, pour inclure les derniers bits des données spécifiques, lorsque leur nombre est inférieur à sept, dans un octet dont les bits supplémentaires sont mis à zéro.

Le module de traduction (101, 201) est agencé pour générer lesdits messages formatés selon le protocole MIDI filaire de la norme MIDI, à partir desdites données spécifiques, par une traduction comportant les étapes suivantes :
- une étape d'introduction (61) d'un premier octet, par le module d'introduction, générant un premier octet, valant soit F0 pour indiquer le début d'un nouveau message, soit F7 pour indiquer la suite d'un précédent message,
- une étape d'identification (62), par le module d'identification, générant un identifiant composé de un à trois octets pour identifier le terminal (2) ou le lecteur (1) auquel le message est destiné,
- les étapes de formatage (71, 72, 73), par les moyens de formatage et une étape d'incorporation (63), par le module d'incorporation, incorporant, dans le message, les données formatées par ces moyens de formatage,
- une étape de clôture (64), par le module de conclusion, générant un octet final, valant F7.

Ensuite, une encapsulation desdits messages en paquets permet une étape de transmission (80) des paquets selon le protocole MIDI-USB (via le câble USB), puis une désencapsulation desdits paquets en messages formatés selon le protocole MIDI filaire. Les détails concernant l'encapsulation et la désencapsulation pour le protocole MIDI-USB ne sont pas nécessaires et ne sont donc pas fournis dans la présente demande. Une fois les paquets transmis, une traduction inverse est nécessaire pour obtenir à nouveau les données spécifiques. Préalablement à cette traduction, une conversion correspondant à l'inverse du formatage décrit précédemment, doit être réalisée.

Le module de traduction (101, 201) comporte des moyens de conversion pour convertir les données desdits messages au protocole MIDI filaire en données spécifiques. Ces moyens de conversion sont agencés pour la mise en oeuvre des étapes de conversion suivantes :
- une étape d'extraction (91) des bits, par le module d'extraction, agencé pour extraire sept bits tous les huit bits,
- une étape de concaténation (92), par le module de concaténation, agencé pour concaténer les bits extraits en octets de huit bits.

Suite à cette conversion des données du corps du message, on obtient les données spécifiques. Préalablement à cette conversion, les messages désencapsulés auront été traduits, par une traduction comportant les étapes suivantes :
- une étape d'interprétation (81), par le module d'interprétation, interprétant, d'une part, la valeur d'un premier octet du message, valant soit F0 et indiquant le début d'un nouveau message, soit F7 et indiquant la suite d'un précédent message, et, d'autre part, la valeur d'un octet final, valant F7 et indiquant la fin du message.
- une étape d'authentification (82), par le module d'authentification agencé pour authentifier l'identifiant généré par le module d'identification à l'étape (62), composé de un à trois octets et identifiant le lecteur (1) ou le terminal (2) auquel est destiné le message,
- les étapes de conversion (91, 92, 93).

On notera que l'étape d'interprétation peut, dans le cas d'un traitement séquentiel des données, être mise en oeuvre 2 fois : une fois sur le premier octet, et une fois sur l'octet final.

Une fois traduites, les données spécifiques sont lues par les applications (100, 200) du terminal et du lecteur, lors d'étapes de lecture des données, pour la réalisation des transactions.

## Revendications

1. Système d'adressage d'un lecteur de carte à puce, le système comprenant, d'une part, au moins un terminal (2) comportant au moins un port USB (U2) et, d'autre part, un lecteur (1) de carte à puce comprenant au moins un port USB (U1) et des moyens (11) de traitement de données exécutant une application embarquée (100) spécifique pour effectuer des transactions avec la carte à puce, par l'échange de données spécifiques, et pour communiquer avec au moins une application (200) exécutée au sein d'un système d'exploitation (OS) exécuté sur des moyens (21) de traitement de données du terminal (2), le système étant **caractérisé en ce que** le système d'exploitation (OS) du terminal comprend au moins un pilote (GD) générique de type MIDI-USB et **en ce que** le lecteur (1) et le terminal (2) comportent chacun :
• un module de traduction (101, 201) traduisant lesdites données spécifiques en messages formatés selon le protocole MIDI filaire de la norme MIDI ou inversement,
• un module d'encapsulation/désencapsulation (102, 202) traduisant lesdits messages au protocole MIDI filaire en paquets formatés selon le protocole MIDI-USB ou inversement.

2. Système selon la revendication 1, **caractérisé en ce que** l'application (200) du terminal (2) est une application logicielle de type navigateur internet et comporte une appliquette (203) ou « applet » compatible avec les protocoles MIDI filaire et MIDI-USB et formant les modules de traduction (201) et d'encapsulation/désencapsulation (202) du terminal (2) pour générer lesdits messages et lesdits paquets.

3. Système selon la revendication 2, **caractérisé en ce que** l'appliquette (203) ou « applet » exécutée dans l'application (200) du terminal est également agencée pour la mise en oeuvre de transactions entre une carte (5) à puce lue par le lecteur (1) et au moins un serveur (3), via au moins un réseau (4) de communication, le serveur (3) comportant des moyens (31) de traitement de données exécutant au moins une application (300) gérant ces transactions.

4. Système selon la revendication 3, **caractérisé en ce que** l'application (300) du serveur (3) est agencée pour transmettre au terminal (2) des données représentatives d'un fichier auto-exécutable agencé pour installer l'appliquette (203) ou « applet » dans l'application (200) du terminal (2).

5. Système selon une des revendications 2 à 4, **caractérisé en ce que** l'appliquette (203) ou « applet » est en langage JAVA.

6. Système selon une des revendications 2 à 4, **caractérisé en ce que** l'appliquette (203) ou « applet » est en langage ActiveX.

7. Système selon une des revendications 1 à 6, **caractérisé en ce que** le module de traduction (101, 201) comporte des moyens de formatage pour formater lesdites données spécifiques en données compatibles avec lesdits messages au protocole MIDI filaire, ces moyens de formatage comportant :
• un module de concaténation agencé pour concaténer tous les bits de tous les octets composant les données du lecteur (1) de carte à puce,
• un module d'intercalage agencé pour intercaler un bit nul tous les sept bits,
• un module d'inclusion agencé pour inclure les derniers bits des données spécifiques, lorsque leur nombre est inférieur à sept, dans un octet dont les bits supplémentaires sont mis à zéro.

8. Système selon une des revendications 1 à 7, **caractérisé en ce que** le module de traduction (101, 201) est agencé pour générer lesdits messages formatés selon le protocole MIDI filaire de la norme MIDI, à partir desdites données spécifiques, grâce à :
• un module d'introduction générant un premier octet, valant soit F0 pour indiquer le début d'un nouveau message, soit F7 pour indiquer la suite d'un précédent message,
• un module d'identification générant un identifiant composé de un à trois octets pour identifier le terminal (2) ou le lecteur (1) auquel le message est destiné,
• les moyens de formatage et un module d'incorporation incorporant, dans le message, les données formatées par ces moyens de formatage,
• un module de conclusion générant un octet final, valant F7.

9. Système selon une des revendications 1 à 8, **caractérisé en ce que** le module de traduction (101, 201) comporte des moyens de conversion pour convertir les données desdits messages au protocole MIDI filaire en données spécifiques, ces moyens de conversion comportant :
• un module d'extraction agencé pour extraire sept bits tous les huit bits,
• un module de concaténation agencé pour concaténer les bits extraits en octets de huit bits.

10. Système selon une des revendications 1 à 9, **caractérisé en ce que** le module de traduction (101, 201) est agencé pour traduire lesdits messages formatés selon le protocole MIDI filaire de la norme MIDI en lesdites données spécifiques, grâce à :
• un module d'interprétation, interprétant, d'une part, la valeur d'un premier octet du message, valant soit F0 et indiquant le début d'un nouveau message, soit F7 et indiquant la suite d'un précédent message, et, d'autre part, la valeur d'un octet final, valant F7 et indiquant la fin du message.
• un module d'authentification agencé pour authentifier un identifiant composé de un à trois octets et identifiant le lecteur (1) ou le terminal (2) auquel est destiné le message,
• les moyens de conversion.

11. Procédé d'adressage d'un lecteur de carte à puce, mis en oeuvre par un système selon l'une des revendications 1 à 10 lorsque le lecteur (1) est connecté (51) sur le terminal (2), par un câble USB via leur port (U1, U2) respectif, le procédé étant **caractérisé en ce qu'**il comporte les étapes suivantes :
• initialisation (52) du pilote (GD) générique dans le terminal (2) et reconnaissance du lecteur (1) comme un périphérique de type MIDI-USB par le terminal (2),
• initialisation de l'application (200) du terminal (2) et de l'application (100) du lecteur (1),
• communication (60) de données, entre l'application (200) du terminal et l'application (100) embarquée du lecteur (1), via leur module de traduction (101, 201) et leur module d'encapsulation/désencapsulation (102, 202), mettant en oeuvre, respectivement, des étapes de traduction et d'encapsulation/désencapsulation en utilisant, respectivement, les protocoles standard de type MIDI filaire et MIDI-USB.

12. Lecteur (1) de carte à puce comprenant au moins un port USB (U1) et des moyens (11) de traitement de données exécutant une application embarquée (100) spécifique pour effectuer des transactions avec la carte à puce, par l'échange de données spécifiques, et pour communiquer avec une application (200) exécutée au sein d'un système d'exploitation (OS) exécuté sur des moyens (21) de traitement de données d'au moins un terminal (2) comprenant au moins un port USB (U2) pour la connexion du lecteur (1), le lecteur (1) étant **caractérisé en ce qu'**il est reconnu comme un périphérique MIDI-USB par le terminal dont le système d'exploitation (OS) du terminal comprend au moins un pilote (GD) générique de type MIDI-USB et **en ce qu'**il comporte :
• un module de traduction (101) traduisant lesdites données spécifiques en messages formatés selon le protocole MIDI filaire de la norme MIDI ou inversement,
• un module d'encapsulation/désencapsulation (102) traduisant lesdits messages au protocole MIDI filaire en paquets (MU) formatés selon le protocole MIDI-USB ou inversement.

13. Lecteur (1) selon la revendication 12, **caractérisé en ce que** le module de traduction (101) comporte des moyens de formatage pour formater lesdites données spécifiques en données compatibles avec lesdits messages au protocole MIDI filaire, ces moyens de formatage comportant :
• un module de concaténation agencé pour concaténer tous les bits de tous les octets composant les données du lecteur (1) de carte à puce,
• un module d'intercalage agencé pour intercaler un bit nul tous les sept bits,
• un module d'inclusion agencé pour inclure les derniers bits des données spécifiques, lorsque leur nombre est inférieur à sept, dans un octet dont les bits supplémentaires sont mis à zéro.

14. Lecteur (1) selon la revendication 13, **caractérisé en ce que** le module de traduction (101) est agencé pour générer lesdits messages formatés selon le protocole MIDI filaire de la norme MIDI, à partir desdites données spécifiques, grâce à :
• un module d'introduction générant un premier octet, valant soit F0 pour indiquer le début d'un nouveau message, soit F7 pour indiquer la suite d'un précédent message,
• un module d'identification générant un identifiant composé de un à trois octets pour identifier le terminal (2) auquel le message est destiné,
• les moyens de formatage et un module d'incorporation incorporant dans le message les données formatées par ces moyens de formatage,
• un module de conclusion générant un octet final, valant F7.

15. Lecteur (1) selon une des revendications 13 et 14, **caractérisé en ce que** le module de traduction (101) comporte des moyens de conversion pour convertir les données desdits messages au protocole MIDI filaire en lesdites données spécifiques, ces moyens de conversion comportant :
• un module d'extraction agencé pour extraire sept bits tous les huit bits,
• un module de concaténation agencé pour concaténer les bits extraits en octets de huit bits.

16. Lecteur (1) selon la revendication 15, **caractérisé en ce que** le module de traduction (101) est agencé pour traduire lesdits messages formatés selon le protocole MIDI filaire de la norme MIDI en lesdites données spécifiques, grâce à :
• un module d'interprétation, interprétant, d'une part, la valeur d'un premier octet du message, valant soit F0 et indiquant le début d'un nouveau message, soit F7 et indiquant la suite d'un précédent message, et, d'autre part, la valeur d'un octet final, valant F7 et indiquant la fin du message,
• un module d'authentification agencé pour authentifier un identifiant composé de un à trois octets et identifiant le lecteur (1) auquel est destiné le message,
• les moyens de conversion.

## Claims

1. System for addressing a smart card reader, the system comprising on the one hand at least one terminal (2) including at least one USB port (U2) and on the other hand, un reader (1) of smart card comprising at least one USB port (U1) and data processing means (11) executing a specific embedded application (100) in order to effect transactions with the smart card by the exchange of specific data, and in order to communicate with at least a application (200) executed within an operating system (OS) executed on data processing means (21) of the terminal (2), the system being **characterised in that** the operating system (OS) of the terminal comprises at least one generic driver (GD) of the MIDI-USB type and **in that** the reader (1) and the terminal (2) each include:
- a translation module (101, 201) which translates the said specific data into messages formatted according to the wired MIDI protocol of the MIDI standard or vice versa,
- an encapsulation/decapsulation module (102, 202) which translates the said messages in the wired MIDI protocol into packets formatted according to the MIDI-USB standard or vice versa.

2. System as claimed in Claim 1, **characterised in that** l'application (200) of the terminal (2) is a software application of the internet navigator type and includes an applet (203) which is compatible with the wired MIDI and MIDI-USB protocols and forms the modules of translation module (201) and encapsulation/decapsulation module (202) of the terminal (2) in order to generate the said messages and the said packets.

3. System as claimed in Claim 2, **characterised in that** the applet (203) executed in the application (200) of the terminal is also arranged for the implementation of transactions between a smart card (5) read by the reader (1) and at least one server (3), via at least one communication network (4), the server (3) including data processing means (31) executing at least one application (300) managing these transactions.

4. System as claimed in Claim 3, **characterised in that** the application (300) of the server (3) is arranged in order to transmit to the terminal (2) data representatives of a self-executable file arranged in order to installer the applet (203) in the application (200) of the terminal (2).

5. System as claimed in any one of Claims 2 to 4, **characterised in that** the applet (203) is in language JAVA.

6. System as claimed in any one of Claims 2 to 4, **characterised in that** the applet (203) is in JAVA language.

7. System as claimed in any one of Claims 1 to 6, **characterised in that** the translation module (101, 201) includes formatting means in order to format the said specific data into data compatible with the said messages in the wired MIDI protocol, these formatting means including:
- a concatenation module arranged to concatenate all the bits of all the bytes constituting the data of the smart card reader (1),
- an interpolation module arranged to interpolate a zero bit every seven bits,
- an inclusion module arranged in order to include the last bits of the specific data, when there are less than seven of them, in a byte of which the additional bits zeroed.

8. System as claimed in any one of Claims 1 to 7, **characterised in that** the translation module (101, 201) is arranged in order to generate the said messages formatted according to the wired MIDI protocol of the MIDI standard, on the basis of the said specific data, by means of: an introduction module which generates a first byte, either with a value F0 to indicate the start of a new message, or with a value F7 to indicates the continuation of a preceding message,
- an identification module which generates an identifier composed of one to three bytes in order to identify the terminal (2) or the reader (1) for which the message is intended,
- the formatting means and an incorporation module which incorporates into the message the data formatted by these formatting means,
- a conclusion module which generates a final, with a value F7.

9. System as claimed in any one of Claims 1 to 8, **characterised in that** the translation module (101, 201) includes conversion means in order to convert the data into data of the said messages in the wired MIDI protocol into specific data, these conversion means including:
- an extraction module arranged in order to extract seven bits every eight bits,
- a concatenation module arranged in order to concatenate the bits extracted in bytes of eight bits.

10. System as claimed in any one of Claims 1 to 9, **characterised in that** the translation module (101, 201) is arranged in order to translate the said messages formatted according to the wired MIDI protocol of the MIDI standard into the said specific data, by means of:
- an interpretation module, which interprets on the one hand the value of a first byte of the message, with a value either F0 indicating the start of a new message, or F7 indicating the continuation of a preceding message, and on the other hand the value of a final byte, with a value F7 indicating the end of the message.
- an authentication module which generates an identifier composed of one to three bytes in order to identity the reader (1) or the terminal (2) for which the message is intended,
- the conversion means.

11. Method of addressing a smart card reader, implemented by a system as claimed in any one of Claims 1 to 10 when the reader (1) is connected (51) to the terminal (2), by a USB cable via their respective port (U1, U2), the method being **characterised in that** it includes the following steps:
- initialisation (52) of the generic driver (GD) in the terminal (2) and recognition of the reader (1) as a peripheral of the MIDI-USB type by the terminal (2),
- initialisation of the application (200) of the terminal (2) and of the application (100) of the reader (1),
- communication (60) of data between the application (200) of the terminal and the embedded application (100) of the reader (1), via their translation module (101, 201) and their encapsulation/decapsulation module (102, 202), implementing respectively steps of translation and encapsulation/decapsulation using respectively the standard protocols of the wired MIDI and MIDI-USB type.

12. Smart card reader (1), comprising at least one USB port (U1) and data processing means (11) executing a specific embedded application (100) in order to effect transactions with the smart card by the exchange of specific data, and in order to communicate with an application (200) executed within an operating system (OS) executed on data processing means (21) of at least one terminal (2) comprising at least one USB port (U2) for the convection of the reader (1), the reader being **characterised in that** it is recognised as a MIDI-USB peripheral by the terminakl of which the termional operating system (OS) comprises at least one generic driver (GD) of the MIDI-USDB type and **in that** it includes:
- a translation module (101) which translates the said specific data into messages formatted according to the wired MIDI protocol of the MIDI standard or vice versa,
- an encapsulation/decapsulation module (102) which translates the said messages in the wired MIDI protocol into packets formatted according to the MIDI-USB standard or vice versa.

13. System as claimed in any one of Claims 12 to 6, **characterised in that** the translation module (101) includes formatting means in order to format the said specific data into data compatible with the said messages in the wired MIDI protocol, these formatting means including:
- a concatenation module arranged to concatenate all the bits of all the bytes constituting the data of the smart card reader (1),
- an interpolation module arranged to interpolate a zero bit every seven bits,
- an inclusion module arranged in order to include the last bits of the specific data, when there are less than seven of them, in a byte of which the additional bits zeroed.

14. Reader (1) as claimed in Claim 13, **characterised in that** the translation module (101) is arranged in order to generate the said messages formatted according to the wired MIDI protocol of the MIDI standard, based on the said specific data, by means of:
8. an introduction module which generates a first byte, either with a value F0 to indicate the start of a new message, or F7 to indicates the continuation of a preceding message,
- an identification module which generates an identifier composed of one to three bytes in order to identify the terminal (2) for which the message is intended,
- the formatting means and an incorporation module which incorporates into the message the data formatted by these formatting means,
- a conclusion module which generates a final byte, with a value F7.

15. Reader (1) as claimed in any one of Claims 13 to 14, **characterised in that** the translation module (101) includes conversion means in order to convert the data of the said messages in the wired MIDI protocol into the said specific data, these conversion means including:
- an extraction module arranged in order to extract seven bits every eight bits,
- a concatenation module arranged in order to concatenate the bits extracted in bytes of eight bits.

16. Reader (1) as claimed in Claim 15, **characterised in that** the translation module (101) is arranged in order to translate the said messages formatted according to the wired MIDI protocol of the MIDI standard into the said specific data, by means of:
- an interpretation module, which interprets on the one hand the value of a first byte of the message, with a value either F0 indicating the start of a new message, or F7 indicating the continuation of a preceding message, and on the other hand the value of a final byte, with a value F7 indicating the end of the message,
- an authentication module which is arranged in order to authenticate an identifier composed of one to three bytes and to identify the reader (1) for which the message is intended,
- the conversion means.

## Patentansprüche

1. System zum Adressieren eines Chipkartenlesers, wobei das System aufweist: einerseits mindestens ein Endgerät (2), das mindestens einen USB-Anschluss (U2) aufweist, und andererseits einen Chipkartenleser (1), der mindestens einen USB-Anschluss (U1) und Mittel (11) zum Verarbeiten von Daten aufweist, die eine spezifische eingebettete Anwendung (100) ausführen, zum Durchführen von Transaktionen mit der Chipkarte mittels des Austausches von spezifischen Daten und zum Kommunizieren mit mindestens einer Anwendung (200), die innerhalb eines Betriebssystems (OS) ausgeführt wird, das auf Datenverarbeitungsmitteln (21) des Endgerätes (2) ausgeführt wird, wobei das System **dadurch gekennzeichnet ist, dass** das Betriebssystem (OS) des Endgerätes mindestens einen generischen Treiben (GD) des MIDI-USB-Typs aufweist, und dass der Leser (1) und das Endgerät (2) jeweils aufweisen:
• ein Übersetzungsmodul (101, 201), das die spezifischen Daten in gemäß dem Draht-MIDI-Protokoll des MIDI-Standards formatierte Nachrichten übersetzt, oder umgekehrt,
• ein Verkapselungs-/Entkapselungsmodul (102, 202), das die Nachrichten im Draht-MIDI-Protokoll in gemäß dem MIDI-USB-Protokoll formatierte Pakete übersetzt, oder umgekehrt.

2. System gemäß Anspruch 1, **dadurch gekennzeichnet, dass** die Anwendung (200) des Endgerätes (2) eine Software-Anwendung des Internetbrowser-Typs ist und ein Applet (203) aufweist, das mit dem Draht-MIDI-Protokoll und dem MIDI-USB-Protokoll kompatibel ist und das Übersetzungsmodul (201) und das Verkapselungs-/Entkapselungsmodul (202) des Endgerätes (2) bildet, um die Nachrichten und die Pakete zu erzeugen.

3. System gemäß Anspruch 2, **dadurch gekennzeichnet, dass** das Applet (203), das in der Anwendung (200) des Endgerätes ausgeführt wird, ferner eingerichtet ist zum Durchführen von Transaktionen zwischen einer von dem Leser (1) ausgelesenen Chipkarte (5) und mindestens einem Server (3) über mindestens ein Kommunikationsnetzwerk (4), wobei der Server (3) Datenverarbeitungsmittel (31) aufweist, die mindestens eine Anwendung (300) ausführen, die die Transaktionen verwaltet.

4. System gemäß Anspruch 3, **dadurch gekennzeichnet, dass** die Anwendung (300) des Servers (3) eingerichtet ist zum Übertragen von Daten an das Endgerät (2), die für eine autoausführbare Datei repräsentativ sind, die zum Installierten des Applets (203) in der Anwendung (200) des Endgeräten (2) eingerichtet ist .

5. System gemäß einem der Ansprüche 2 bis 4, **dadurch gekennzeichnet, dass** das Applet (203) in JAVA-Sprache ist.

6. System gemäß einem der Ansprüche 2 bis 4, **dadurch gekennzeichnet, dass** das Applet (203) in ActiveX-Sprache ist.

7. System gemäß einem der Ansprüche 1 bis 6, **dadurch gekennzeichnet, dass** das Übersetzungsmodul (101, 201) aufweist: Formatierungsmittel zum Formatieren der spezifischen Daten in Daten, die mit den Nachrichten im Draht-MIDI-Protokoll kompatibel sind, wobei die Formatierungsmittel aufweise:
• ein Verkettungsmodul, das zum Verketten aller Bits aller Oktette eingerichtet ist, die die Daten des Lesers (1) der Chipkarte bilden,
• ein Zwischenschaltungsmodul, das zum Zwischenschalten eines Nullbits alle sieben Bits eingerichtet ist,
• ein Einlagerungsmodul, das zum Einlagern der letzten Bits der spezifischen Daten in einem Oktett, dessen zusätzliche Bits auf Null gesetzt sind, eingerichtet ist, wenn ihre Anwahl kleiner als sieben ist.

8. System gemäß einem der Ansprüche 1 bis 7, **dadurch** gekenntzeichnet, dass das Übersetzungsmodul (101, 201) zum Erzeugen der gemäß dem Draht-MIDI-Protokoll des MIDI-Standards formatierten Nachrichten aus den spezifischen Daten eingerichtet ist, mittels:
• eines Einführungsmoduls, das ein erstes Oktett erzeugt, das entweder den Wert F0 zum Anzeigen des Beginns einer neuen Nachricht oder den Wert F7 zum Anzeigen der Fortsetzung einer vorhergehenden Nachricht hat,
• eines Identifikationsmoduls, das einen Identifizieren erzeugt, der aus einem bis drei Oktetts zusammengesetzt ist, zum Identifizierten des Endgerätes (2) oder des Lesers (1), für das/den die Nachricht bestimmt ist,
• der Formatierungsmittel und eines Eingliederungsmoduls, das die durch die Formatierungsmittel formatierten Daten in die Nachricht eingliedert, und mittels
• eines Schlussmoduls, das ein Endoktett mit dem Wert F7 erzeugt.

9. System gemäß einem der Ansprüche 1 bis 8, **dadurch gekennzeichnet, dass** das Übersetzungsmodul (101, 201) Konvertierungsmittel aufweist zum Konvergieren der Daten der Nachrichten mit dem Draht-MIDI-Protokoll in spezifische Daten, wobei die Konvertierungsmittel aufweisen:
• ein Extraktionsmodul, das zum Extrahieren von sieben Bits alle acht Bits eingerichtet ist, und
• ein Verkettungsmodul, das zum Verketten der extrahierten Bits zu Oktetten von acht Bits eingerichtet ist.

10. System gemäß einem der Ansprüche 1 bis 9, **dadurch gekennzeichnet, dass** das Übersetzungsmodul (101, 201) zum Übersetzen der gemäß dem Draht-MIDI-Protokoll des MIDI-Standards formatierten Nachrichten in die spezifischen Daten eingerichtet ist, mittels:
• eines Interpretationsmoduls, das interpretiert: einerseits den Wert eines ersten Oktetts der Nachricht, das entweder den Wert F0 hat und den Beginn einer neuen Nachricht anzeigt, oder den Wert F7 hat und die Fortsetzung einer vorhergehenden Nachricht anzeigt, und andererseits den Wert eines Endoktetts, das den Wert F7 hat und das Ende der Nachricht anzeigt,
• eines Authentifizierungsmoduls, das zum Authentifizieren eines Identifizierers eingerichtet ist, der aus einem bis drei Oktetten zusammengesetzt ist und den Leser (1) oder das Endgerät (2) identifiziert, für den/das die Nachricht bestimmt ist, und mittels
• der Konvertierungsmittel.

11. Verfahren zum Adressieren eines Chipkartenlesers, das mittels eines Systems gemäß einem der Ansprüche 1 bis 10 durchgeführt wird, wenn der Leser (1) durch ein USB-Kabel über ihren jeweiligen Anschluss (U1, U2) mit dem Endgerät (2) verbunden ist (51), wobei das Verfahren **dadurch gekennzeichnet ist, dass** es die folgenden Schritte aufweiset:
• Initialisieren (52) des generischen Treibers (GD) in dem Endgerät (2) und Erkennen des Lesers (1) als Peripheriegerät des MIDI-USB-Typs durch das Endgerät (2),
• Initialisieren der Anwendung (200) des Endgerätes (2) und der Anwendung (100) des Lesers (1),
• Kommunizieren (60) von Daten zwischen der Anwendung (200) des Endgerätes und der eingebetteten Anwendung (100) des Lesers (1) über ihr Übersetzungsmodul (101, 201) und ihr Verkapselungs-/Entkapselungsmodul (102, 202), die jeweils übersetzung- und Verkapselungs-/Entkapselungsschritte durchrühren, unter der jeweiligen Verwendung der Standardprotokolle des Draht-MIDI- und des MIDI-USB-Typs.

12. Chipkartenleser (1), aufweisend mindestens einen USB-Anschluss (U1) und Datenverarbeitungsmittel (11), die eine spezifische eingebettete Anwendung (100) ausführen zum Durchführen von Transaktionen mit der Chipkarte mittels des Austauschens von spezifischen Daten und zum Kommunizieren mit einer Anwendung (200), die innerhalb eines Betriebssystems (OS) ausgeführt wird, das auf den Datenverarbeitungsmitteln (21) mindestens eines Endgerätes (2) ausgeführt wird, aufweisend mindestens einen USB-Anschluss (U2) für das Abschließen des Lesers (1), wobei der Leser (1) **dadurch gekennzeichnet ist, dass** er von dem Endgerät als MIDI-USB-Peripheriegerät erkannt wird, wobei das Betriebssystem (OS) des Endgerätes mindestens einen genetischen Treiber (GD) des MIDI-USB-Typs aufweist, und dass er aufweist:
• ein Übersetzungsmodul (101), das die spezifischen Daten in gemäß dem Draht-MIDI-Protokoll des MIDI-Standards formatierte Nachrichten übersetzt, oder umgekehrt,
• ein Verkapselungs-/Entkapselungsmodul (102), das die Nachrichten im Draht-MIDI-Protokoll in Pakete (MU) übersetzt, die gemäß dem MIDI-USB-Protokoll formatiert sind, oder umgekehrt.

13. Leser (1) gemäß Anspruch 12, **dadurch gekennzeichnet, dass** das Übersetzungsmodul (101) Formatierungsmittel aufweist zum Formatieren der spezifischen Daten in Daten, die mit den Nachrichten im Draht-MIDI-Protokoll kompatibel sind, wobei die Formatierungsmittel aufweisen:
• ein Verkettungsmodul, das zum Verketten aller Bits aller Oktette eingerichtet ist, die die Daten des Lesers (1) der Chipkarte bilden,
• ein Zwischenschaltungsmodul, das zum Zwischenschalten eines Nullbits alle sieben Bits eingerichtet ist,
• ein Einlagerungsmodul, das zum Einlagern der letzten Bits der spezifischen Daten in einem Oktett, dessen zusätzliche Bits auf Null gesetzt sind, eingerichtet ist, wenn ihre Anzahl kleiner als sieben ist.

14. Lesers (1) gemäß Anspruch 13, **dadurch gekennzeichnet, dass** das Übersetzungsmodul (101) zum Erzeugen der gemäß dem Draht-MIDI-Protokoll des MIDI-Standards formatierten Nachrichten aus den spezifischen Daten eingerichtet ist, mittels:
• eines Einführungsmoduls, das ein erstes Oktett erzeugt, das entweder den Wert F0 zum Anzeigern des Beginns einer neuen Nachricht oder den Wert F7 zum Anzeigen der Fortsetzung einer vorhergehenden Nachricht hat,
• eines Identifikationsmoduls, das einen Identifizieren erzeugt, der aus einem bis drei Oktetts zusammengesetzt ist, zum Identifizierten des Endgerätes (2), für das die Nachricht bestimmt ist,
• der Formatierungsmittel und eines Eingliederungsmoduls, das die durch die Formatierungsmittel formatierten Daten in die Nachricht eingliedert, und mittels
• eines Schlussmoduls, das ein Endoktett mit dem Wert F7 erzeugt.

15. Lesers (1) gemäß einem der Ansprüche 13 und 14, **dadurch gekennzeichnet, dass** das Übersetzungsmodul (101) Konvertierungsmittel aufweist zum Konvertieren der Daten der Nachrichten im Draht-MIDI-Protokoll in die spezifischen Daten, wobei die Konvertierungsmittel aufweisen:
• ein Extraktionsmodul, das zum Extrahieren von sieben Bits alle acht Bits eingerichtet ist, und
• ein Verkettungsmodul, das zum Verketten der extrahierten Bits zu Oktetten von acht Bits eingerichtet ist.

16. Leser (1) gemäß Anspruch 15, **dadurch gekennzeichnet, dass** das Übersetzungsmodul (101) zum Übersetzen der gemäß dem Draht-MIDI-Protokoll des MIDI-Standards formatierten Nachrichten in die spezifischen Daten eingerichtet ist, mittels:
• eines Interpretationsmoduls, das interpretiert: einerseits den Wert eines ersten Oktetts der Nachricht, das entweder den Wert F0 hat und den Beginn einer neuen Nachricht anzeigt, oder den Wert F7 hat und die Fortsetzung einer vorhergehenden Nachricht anzeigt, und andererseits den Wert eines Endoktetts, das den Wert F7 hat und das Ende der Nachricht anzeigt,
• eines Authentifizierungsmoduls, das zum Authentifizieren eines Identifizierers eingerichtet ist, der aus einem bis drei Oktetten zusammengesetzt ist und den Lesers (1) identifiziert, für den die Nachricht bestimmt ist, und mittels
• der Konvertierungsmittel.
